# EUROPÄISCHE PATENTSCHRIFT

(11) **EP 4 649 477 B1**
(45) Veröffentlichungstag und Bekanntmachung des Hinweises auf die Patenterteilung: **01.07.2026**
(21) Anmeldenummer: 24812437.2
(22) Anmeldetag: 19.11.2024
(51) Int. Cl.: G09B 23/28, G09B 23/30, G09B 23/32

(54) **VORRICHTUNG FÜR EINEN DENTALEN AUSBILDUNGSPLATZ SOWIE DENTALE SCHULUNGSEINRICHTUNG**
APPARATUS FOR A DENTAL TRAINING STATION, AND DENTAL TRAINING FACILITY
APPAREIL POUR UNE STATION D'ENTRAÎNEMENT DENTAIRE, ET INSTALLATION D'ENTRAÎNEMENT DENTAIRE

(30) Priorität: 05.02.2024 DE 102024201017
(43) Veröffentlichungstag der Anmeldung: 19.11.2025
(73) Patentinhaber: Zeising Germany GmbH, 91227 Leinburg (DE)
(72) Erfinder: ZEISING, Reiner, 91227 Leinburg (DE)
(74) Vertreter: Rau, Schneck & Hübner Patentanwälte Rechtsanwälte PartGmbB
(86) Internationale Anmeldenummer: PCT/EP2024/082822
(87) Internationale Veröffentlichungsnummer: WO 2025/168237

(56) Entgegenhaltungen:
- WO-A1-2010/115274
- JP-B2- 7 296 254
- US-A1- 2021 174 705
- US-A1- 2021 312 834
- US-A1- 2022 383 775

## Beschreibung

Die Erfindung betrifft eine Vorrichtung für einen dentalen Ausbildungsplatz sowie eine dentale Schulungseinrichtung.

Bei der dentalen Ausbildung werden handwerkliche Tätigkeiten wie insbesondere die Nutzung zahnmedizinischer Behandlungsinstrumente an einer Übungspuppe geübt. Zur digitalen Unterstützung können einem Auszubildenden Informationen über einen Bildschirm angezeigt werden. Zur Aufnahme der Informationen muss der Auszubildende seinen Blick weg vom Arbeitsort, nämlich einer Mundhöhle der Übungspuppe, und hin zu dem Bildschirm richten. Dadurch wird der Auszubildende abgelenkt. Unbedachte Körperbewegungen und/oder Handbewegungen können zu einem unerwünschten Arbeitsergebnis führen. Da der Auszubildende üblicherweise beidhändig in der Mundhöhle hantiert, besteht ein Verletzungsrisiko für ihn selbst.

US 2022/0383775 A1 offenbart ein dentales Simulatorsystem.

US 2021/0174705 A1 offenbart einen automatisierten Dentalartikulator zu Ausbildungszwecken.

US 2021/0312834 A1 offenbart einen vibrotaktilen Apparat zur Dentalausbildung.

WO 2010/115 274 A1 und JP 7 296 254 B2 offenbaren jeweils Ausbildungsgeräte für Zahnärzte.

Es die Aufgabe der vorliegenden Erfindung, die dentale Ausbildung zu verbessern und insbesondere die Integration einer digitalen Unterstützung beim handwerklichen Training eines Auszubildenden zu verbessern.

Die Aufgabe ist erfindungsgemäß gelöst durch eine Vorrichtung mit den im Anspruch 1 angegebenen Merkmalen sowie durch eine dentale Schulungseinrichtung mit den in Anspruch 10 angegebenen Merkmalen.

Erfindungsgemäß wurde erkannt, dass die digitale Unterstützung bei der dentalen Ausbildung verbessert ist, wenn ein Bildschirm an einer Versorgungsstation befestigt ist. Die Versorgungsstation ist insbesondere eine Simulationseinheit. Die erfindungsgemäße Vorrichtung kann vorteilhaft genutzt werden bei der Ausbildung von zahnmedizinischen Studenten, Zahnärzten, Kieferorthopäden, Kieferchirurgen und/oder Assistenzpersonal. Insbesondere ist der Bildschirm an der Versorgungsstation unmittelbar gehalten. Insbesondere befindet sich der Bildschirm im Blickfeld des Auszubildenden. Um digitale Unterstützung von dem Bildschirm aufzunehmen, kann der Auszubildende durch eine geringe Augenbewegung und/oder eine kleine Kopfbewegung den Blick zwischen Bildschirm und Mundhöhle einer Übungspuppe wechseln. Insbesondere ist eine Körperbewegung, insbesondere eine große Kopfbewegung, des Auszubildenden entbehrlich. Das Risiko eines Behandlungsfehlers und/oder einer Verletzung sind minimiert.

Der Erfindung liegt die Erkenntnis zugrunde, dass dentale Behandlungen von einem Behandler vorwiegend mit nach unten geneigter Kopfhaltung ausgeführt werden, wobei ein Patient sich typischerweise in einer sitzenden und/oder liegenden Position befindet. Insbesondere ist der Behandler zumindest teilweise über den Patienten gebeugt. Durch die erfindungsgemäße Anordnung des Bildschirms wird die digitale Unterstützung dem Auszubildenden in vorteilhafter Weise angeboten. Er kann die digitale Unterstützung aufnehmen, ohne eine drehende Kopfbewegung und/oder Körperbewegung durchführen zu müssen. Die digitale Unterstützung wird effektiv und praktikabel zur Verfügung gestellt. Die digitale Unterstützung orientiert sich unmittelbar an der typischen Arbeitshaltung des Behandlers und befindet sich im Umfeld einer typischen Kopfhaltung des Behandlers.

Der Bildschirm weist insbesondere eine Mindestdiagonale von 7 Zoll, insbesondere mindestens 8 Zoll, insbesondere mindestens 10 Zoll, insbesondere mindestens 12 Zoll, insbesondere mindestens 13 Zoll, insbesondere mindestens 15 Zoll, insbesondere mindestens 17 Zoll, insbesondere mindestens 21 Zoll, insbesondere mindestens 23 Zoll, insbesondere mindestens 25 Zoll, insbesondere mindestens 27 Zoll, insbesondere mindestens 29 Zoll, insbesondere mindestens 31 Zoll, insbesondere mindestens 35 Zoll und insbesondere mindestens 39 Zoll auf. Es wurde erkannt, dass eine Mindestgröße für den Bildschirm vorteilhaft ist, um neben den Einstellungen der dentalen Behandlungsübungsinstrumente, insbesondere deren Einstellungen, insbesondere auch Bildinformationen zur Verfügung stellen zu können. Einem Zoll entsprechen 2,54 cm.

Der Bildschirm weist eine hohe Wiedergabequalität auf, insbesondere eine hohe Auflösungsqualität, insbesondere mit einer physikalischen Auflösung von 1920 x 1080 Pixeln oder höher.

Die Versorgungsstation ist insbesondere im Wesentlichen turmartig ausgeführt und weist ein Gehäuse auf. Die Versorgungsstation ist insbesondere an eine externe Stromquelle anschließbar und/oder weist eine integrierte Stromquelle auf. Die Versorgungsstation weist insbesondere einen oder mehrere Antriebe für mindestens ein dentales Behandlungsübungsinstrument auf. Die Versorgungsstation ist insbesondere ein Simulator eines dentalen Behandlungsplatzes. Der mechanische Aufbau der Versorgungsstation ist einem dentalen Behandlungsplatz nachempfunden. Der Auszubildende kann mittels der Versorgungsstation und dem mindestens einem dentalen Behandlungsübungsinstrument die handwerklichen Tätigkeiten beispielsweise eines Zahnarztes erlernen. Insbesondere ist das mindestens eine dentale Behandlungsübungsinstrument mehrgelenkig mit der Versorgungsstation verbunden.

Es ist insbesondere denkbar, dass die Versorgungsstation mehrteilig ausgeführt ist, also insbesondere zusätzlich zu dem Gehäuse, an dem die Übungspuppe gehalten ist, ein Zusatzgehäuse aufweist, das unabhängig von dem Gehäuse ausgeführt und insbesondere mobil dazu ausgeführt ist.

Die Übungspuppe weist insbesondere einen rumpfartigen Oberkörper mit einem daran befestigten Kopf auf mit einer Mundhöhle und einem darin angeordneten Gebiss, das insbesondere aus der Mundhöhle herausnehmbar ausgeführt ist und insbesondere einen bezahnten Oberkiefer und Unterkiefer umfasst. Wesentlich ist, dass die Übungspuppe den Kopf mit Mundhöhle aufweist, der insbesondere mittels einer Stange und/oder Schiene an der Versorgungsstation veränderlich beweglich befestigt sein kann. Der rumpfartige Oberkörper ist optional.

Der Bildschirm dient insbesondere zur Darstellung von Bildern und/oder Filmen. Der Bildschirm kann insbesondere als Berührbildschirm, der auch als Touchscreen bezeichnet wird, ausgeführt sein, um dem Auszubildenden unmittelbare Eingaben zu ermöglichen. Der Bildschirm steht mit einer Steuerungseinheit in, insbesondere bidirektionaler, Signalverbindung. Mit der Steuerungseinheit können die auf dem Bildschirm darzustellenden Bilder und/oder Filme angezeigt werden. Die Steuerungseinheit ist insbesondere als Computer ausgeführt und ein Teil der erforderlichen Hardware insbesondere in der Versorgungsstation integriert angeordnet.

Eine Anordnung des Bildschirms in vertikaler Richtung unterhalb einer von der Übungspuppe festgelegten Arbeitshöhe ermöglicht dem Auszubildenden eine intuitive Informationsaufnahme. In vertikaler Richtung ist der Bildschirm unterhalb einer von der Übungspuppe festgelegten Arbeitshöhe angeordnet. Die Arbeitshöhe wird insbesondere durch die vertikale Position der Mundhöhle der Übungspuppe festgelegt, wobei sich die Übungspuppe insbesondere in einer horizontal oder gegenüber der Horizontalen geneigt orientierten Position befindet. Ein Neigungswinkel der geneigten Position beträgt höchstens 60°, insbesondere höchstens 45°, insbesondere höchstens 30° und insbesondere höchstens 15°. Die vertikale Position der Mundhöhle wird insbesondere durch die Mundöffnung definiert. Die Mundöffnung ist insbesondere eine Fläche, die parallel zur Kopfposition der Übungspuppe orientiert ist. In der liegenden Position der Übungspuppe ist die Mundöffnung horizontal orientiert. Bei der geneigten Anordnung der Übungspuppe ist die Mundöffnung mit dem Neigungswinkel gegenüber der Horizontalen orientiert.

Insbesondere ist der Bildschirm mit seiner Oberkante mindestens 1 cm, insbesondere mindestens 2 cm, insbesondere mindestens 5 cm, insbesondere mindestens 10 cm, insbesondere mindestens 15 cm sowie insbesondere höchstens 50 cm, unterhalb der Arbeitshöhe der Übungspuppe angeordnet, wenn die Übungspuppe horizontal liegend angeordnet ist. Wenn die Übungspuppe geneigt angeordnet ist, ist der Bildschirm mit seiner Oberkante, insbesondere abhängig vom Neigungswinkel, mindestens 5 cm, insbesondere mindestens 10 cm, insbesondere mindestens 15 cm, insbesondere mindestens 20 cm, insbesondere mindestens 25 cm, insbesondere mindestens 30 cm und insbesondere höchstens 70 cm, unterhalb der Arbeitshöhe der Übungspuppe angeordnet.

Wenn die Übungspuppe in einer aufrechten Position angeordnet ist, also die Mundöffnung vertikal oder mit einem Neigungswinkel von mehr als 60° gegenüber der Horizontalen orientiert angeordnet ist, ist der Bildschirm mit seiner Oberkante mindestens 20 cm, insbesondere mindestens 25 cm, insbesondere mindestens 30 cm, insbesondere mindestens 35 cm, insbesondere mindestens 40 cm und insbesondere höchstens 60 cm unterhalb der Arbeitshöhe der Übungspuppe angeordnet.

Der Bildschirm ist insbesondere in horizontaler Richtung beabstandet von der Übungspuppe, insbesondere deren Kopf mit Mundhöhle, angeordnet, also seitlich neben der Übungspuppe. Insbesondere ist der Bildschirm in horizontaler Richtung zwischen der Übungspuppe, insbesondere deren Kopf mit Mundhöhle, und der Versorgungsstation, insbesondere deren Gehäuse, angeordnet.

Eine Vorrichtung gemäß Anspruch 2 ermöglicht eine realitätsnahe Ausbildung. Das mindestens eine dentale Behandlungsübungsinstrument kann als Zahnarztbohrer ausgeführt sein, der insbesondere als zahnmedizinische Turbine und/oder Motor ausgeführt ist und Bohrer und/oder Fräser aufweisen kann. Zusätzlich oder alternativ kann das mindestens eine dentale Behandlungsübungsinstrument als intraorale Kamera und/oder als 3D-Scanner ausgeführt sein. Damit kann der Auszubildende Bild- und/oder Videoaufnahmen und/oder Scans erzeugen, insbesondere aus der Mundhöhle der Übungspuppe. Diese Aufnahmen und/oder Scans können in der Steuerungseinheit, insbesondere in einem integrierten Datenspeicher, und/oder in einem externen Datenspeicher gespeichert werden. Zusätzlich oder alternativ können die Aufnahmen und/oder Scans über eine Datenverbindung Dritten, insbesondere einem Dozenten und/oder anderen Auszubildenden, zur Verfügung gestellt werden, insbesondere in Echtzeit. Darüber hinaus können die Aufnahmen der intraoralen Kamera und/oder die Scans des 3D-Scanners an dem Bildschirm dargestellt werden. Dadurch hat der Auszubildende eine wichtige Eigenkontrolle sowohl für seine eigene Behandlungstätigkeit als auch für die Inhalte, die er Dritten zur Verfügung stellt. Dadurch ist eine kontrollierte Weitergabe der visuellen Informationen sichergestellt.

Eine Vorrichtung gemäß Anspruch 3 ermöglicht eine besonders vorteilhafte Informationsaufnahme für den Auszubildenden. Die Versorgungsstation weist eine Aufstellfläche auf, mit der sie am Untergrund aufgestellt wird. Bezüglich dieser Aufstellfläche ist der Bildschirm mit einer mittleren vertikalen Höhe angeordnet, die zwischen 0,5 m und 1,5 m beträgt. Als mittlere vertikale Höhe wird der vertikale Abstand von der Aufstellfläche zum vertikalen Mittelpunkt des Bildschirms verstanden, also dem Schnittpunkt der Bildschirmdiagonalen. Dieser Abstand beträgt insbesondere höchstens 1,2 m und insbesondere höchstens 1,0 m. Insbesondere beträgt der Abstand höchstens 0,9 m und insbesondere höchstens 0,87 m.

Insbesondere ist die Oberkante des Bildschirms auf einer vertikalen Höhe von höchstens 1,0 m oberhalb der Aufstellfläche, insbesondere höchstens 0,9 m, insbesondere höchstens 0,87 m und insbesondere höchstens 0,85 m.

Eine geneigte Anordnung des Bildschirms gemäß Anspruch 4 erleichtert dem Auszubildenden eine intuitive Informationsaufnahme. Ein Neigungswinkel des Bildschirms gegenüber einer Horizontalebene beträgt mindestens 1°, insbesondere mindestens 5°, insbesondere mindestens 10° und insbesondere mindestens 15°. Der Neigungswinkel beträgt höchstens 30°, insbesondere höchstens 45°, insbesondere höchstens 60°, insbesondere höchstens 70°, insbesondere höchstens 75°, insbesondere höchstens 80°, insbesondere höchstens 85° und insbesondere weniger als 90°. Insbesondere ist der Neigungswinkel veränderlich feststellbar. Dadurch kann der Neigungswinkel an eine individuelle Blickwinkel-Situation des Auszubildenden angepasst werden. Insbesondere ist der Bildschirm mit seiner Bildfläche der Übungspuppe, insbesondere deren Kopf mit Mundhöhle, zugewandt. Insbesondere ist die Bildfläche des Bildschirms zumindest anteilig nach oben gerichtet. Eine Flächennormale der Bildfläche ist zumindest anteilig vertikal nach oben gerichtet. Die Flächennormale entspricht einer senkrechten Abstrahlrichtung eines von der Bildfläche abgestrahlten Bildes.

Es wurde insbesondere gefunden, dass durch die geneigte Anordnung des Bildschirms eine vorteilhafte Zugänglichkeit bei Arbeiten sowohl seitlich neben der Übungspuppe in einer sogenannten 9-Uhr-Position, insbesondere für Arbeiten am Unterkiefer der Übungspuppe, als auch hinter dem Kopf der Übungspuppe in einer sogenannten 12-Uhr-Position, insbesondere für Arbeiten am Oberkiefer der Übungspuppe, sichergestellt ist. Als besonders vorteilhaft hat sich die Nutzung der Vorrichtung erwiesen, wenn sich der Auszubildende in einer sogenannten 12-Uhr-Position befindet, also hinter der Übungspuppe, insbesondere deren Kopf mit Mundhöhle, auf einer der Versorgungsstation abgewandten Seite der Übungspuppe, insbesondere deren Kopf mit Mundhöhle. Eine Aufnahme der digitalen Unterstützung vom Bildschirm kann vornehmlich, insbesondere ausschließlich, durch eine Bewegung der Augäpfel des Auszubildenden erfolgen. Eine Kopfbewegung kann vermieden werden.

Die Ausführung der Versorgungsstation mit dem geneigten Bildschirm ist mechanisch robust und für die Anwendung im Ausbildungsbetrieb vorteilhaft.

Eine Vorrichtung gemäß Anspruch 5 ist kompakt ausgeführt. Insbesondere ist der Bildschirm unmittelbar an einem Gehäuse der Versorgungsstation angeordnet.

Eine Vorrichtung gemäß Anspruch 6 ermöglicht eine vorteilhafte Anordnung des Bildschirms. Eine überhängende Anordnung an der Versorgungsstation ermöglicht eine zusätzliche Arbeitsfläche an einer Oberseite der Versorgungsstation. Die Oberseite der Versorgungsstation kann insbesondere als zusätzliche Ablagefläche für Instrumente dienen, indem die zusätzliche Ablagefläche als Vertiefung ausgeführt ist, um ein Wegrollen von Instrumenten und/oder kleinen Gegenständen zu vermeiden. Insbesondere wurde erkannt, dass der Bildschirm vorteilhaft überhängend in einem Bereich zwischen Versorgungsstation und Übungspuppe angeordnet werden kann. Wenn der Bildschirm überhängend an der Versorgungsstation ausgebildet ist, können zur Stabilisierung, insbesondere im Bereich der Abwinklung der Aufnahmeplatte des Bildschirms und der Arbeitsplatte der Versorgungsstation, seitliche Schutzelemente angebracht sein, insbesondere seitliche Edelstahlbleche, um eine mechanische Beeinträchtigung des überhängenden Bildschirms zu vermeiden und/oder Hebelkräfte durch mechanische Beanspruchungen, insbesondere in Folge eines unachtsamen Umgangs, aufzufangen. Die seitlichen Schutzelemente bilden insbesondere eine Versteifung. Die seitlichen Schutzelemente sind insbesondere als Edelstahlbügel ausgeführt und insbesondere im Wesentlichen flächig oder eingenutet an der Versorgungsstation integriert angeordnet. Die seitlich überhängende Anordnung des Bildschirms ist mechanisch robust ausgeführt.

Alternativ kann der Bildschirm an der Versorgungsstation und insbesondere an deren Gehäuse integriert angeordnet sein, insbesondere an der Oberseite. Die Versorgungsstation mit dem integrierten Bildschirm ist besonders kompakt ausgeführt.

Es ist auch möglich, den Bildschirm beweglich an der Versorgungsstation anzubringen, beispielsweise mittels eines Schwenkarms, der insbesondere auch mit einem Scherenmechanismus ausgeführt sein kann. Es ist grundsätzlich auch denkbar, dass der Bildschirm an der Versorgungsstation mittelbar befestigbar ist mittels zusätzlicher Halte- oder Befestigungselemente.

Besonders vorteilhaft ist es, wenn der Bildschirm an der Versorgungsstation wasserdicht versiegelt eingebaut ist. Dazu kann der Bildschirm in eine wasserfeste Platte eingefasst sein.

Zusätzlich oder alternativ kann der Bildschirm an der Versorgungsstation höhenverstellbar befestigt sein.

Eine Anordnung der Übungspuppe gemäß Anspruch 7 ermöglicht verschiedene Übungspositionen. Außerdem kann die Vorrichtung in eine platzsparende Parkposition gebracht werden. Insbesondere ist ein Neigungswinkel der Übungspuppe bezogen auf die Horizontalebene zwischen 0°, also horizontal, und + 90°, also vertikal, veränderlich festlegbar. Die Verstellung des Neigungswinkels ist insbesondere stufenlos möglich.

Eine Vorrichtung gemäß Anspruch 8 vereinfacht die Datenübertragung. Ein Daten-Sende-/Empfangsmodul dient zum Senden und/oder Empfangen von Daten. Insbesondere ist das Daten-Sende-/Empfangsmodul in der Steuerungseinheit integriert angeordnet. Das Daten-Sende/Empfangsmodul ist insbesondere kabellos zur Datenübertragung ausgeführt und weist insbesondere eine Schnittstelle zur kabellosen Datenübertragung oder kabelgebundenen Datenübertragung auf. Dadurch kann die Vorrichtung vorteilhaft in ein, insbesondere bidirektionales, Datenübertragungsnetzwerk integriert werden.

Ein Kommunikationssystem gemäß Anspruch 9 ermöglicht dem Auszubildenden eine Kommunikation, insbesondere eine Audio- und/oder Video-Kommunikation, insbesondere in Echtzeit, mit Dritten, insbesondere mit einem Dozenten. Das Kommunikationssystem ist insbesondere bidirektional ausgeführt. Das Kommunikationssystem ist insbesondere in der Steuerungseinheit integriert.

Eine dentale Schulungseinrichtung gemäß Anspruch 10 weist die Vorteile einer erfindungsgemäßen Vorrichtung auf, worauf hiermit verwiesen wird.

Eine derartige dentale Schulungseinrichtung für Zahnärzte umfasst mindestens einen dentalen Ausbildungsplatz und insbesondere mehrere dentale Ausbildungsplätze. Der mindestens eine dentale Ausbildungsplatz ist mit mindestens einem Dozenten-Arbeitsplatz signaltechnisch verbunden. Dadurch ist es möglich, dass ein Dozent am Dozenten-Arbeitsplatz die Tätigkeiten des Auszubildenden, insbesondere in Echtzeit verfolgt. Dazu kann der Auszubildende seine Tätigkeiten mittels intraoraler Kamera und/oder 3D-Scanner aufnehmen und übertragen. Diese Übertragung kann der Dozent und/oder der Auszubildende auch anderen Auszubildenden an deren Arbeitsplatz zur Verfügung stellen. Der Dozent kann von seinem Dozenten-Arbeitsplatz aus CAD-, Bild- und/oder Video-Daten an einen oder mehrere Auszubildenden übertragen. Der Betreuungsaufwand für mehrere Auszubildende durch den Dozenten direkt beim jeweiligen Auszubildenden

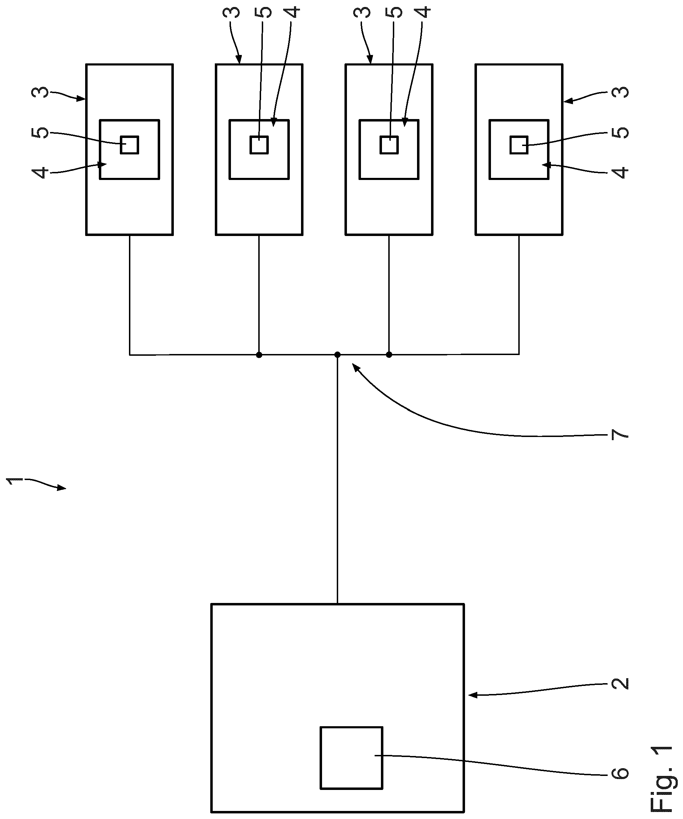

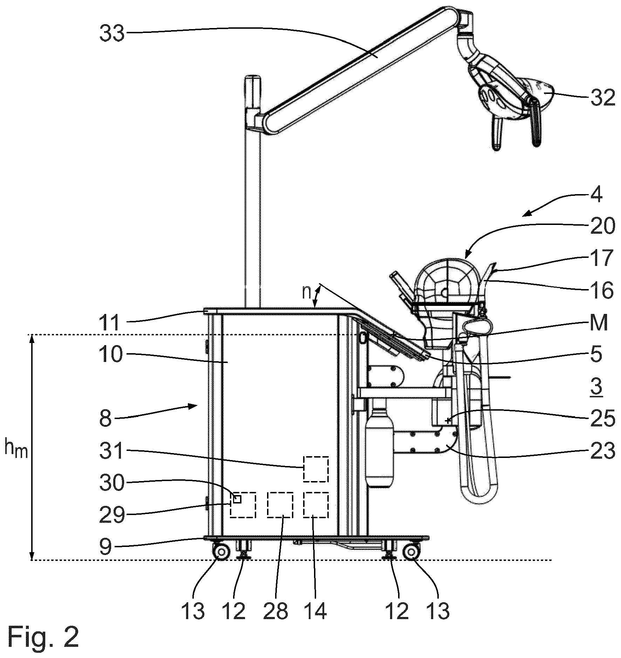

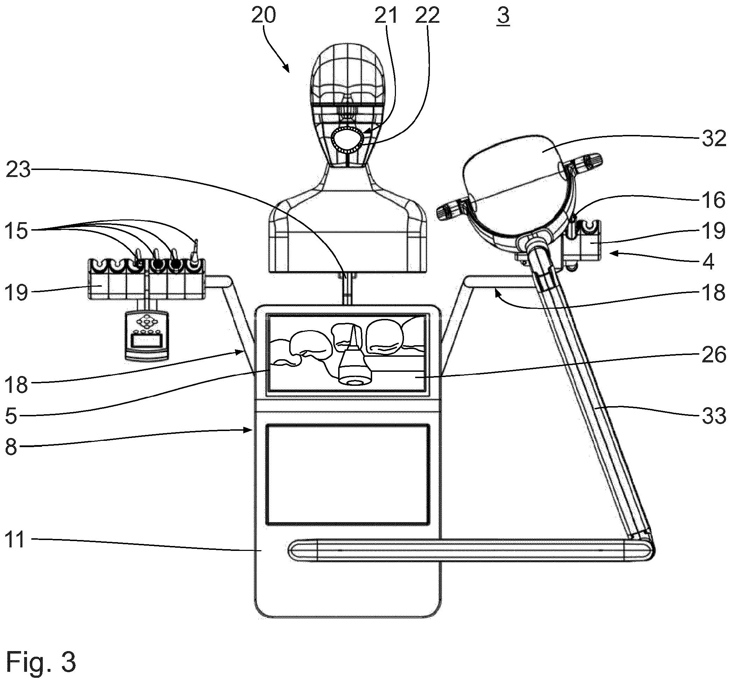

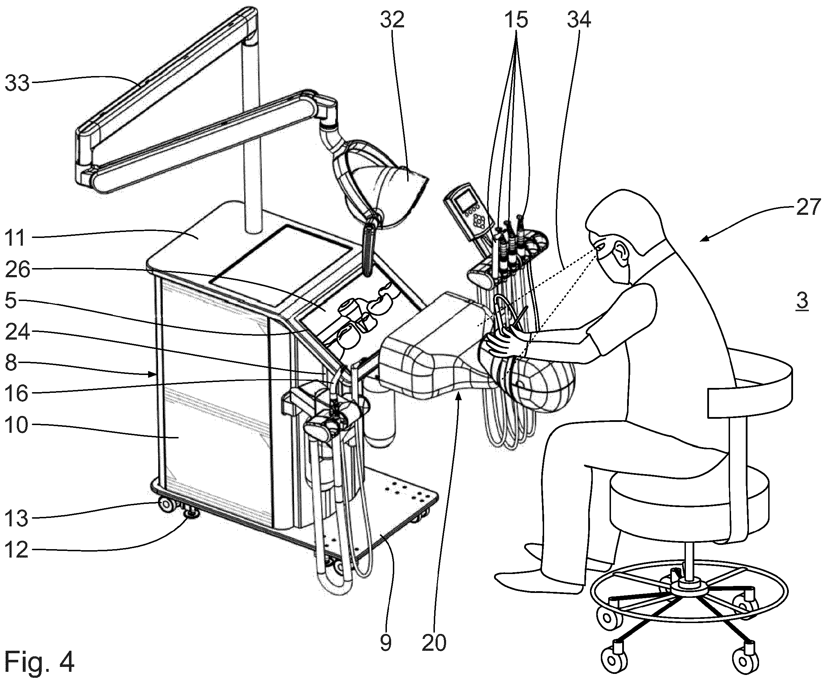

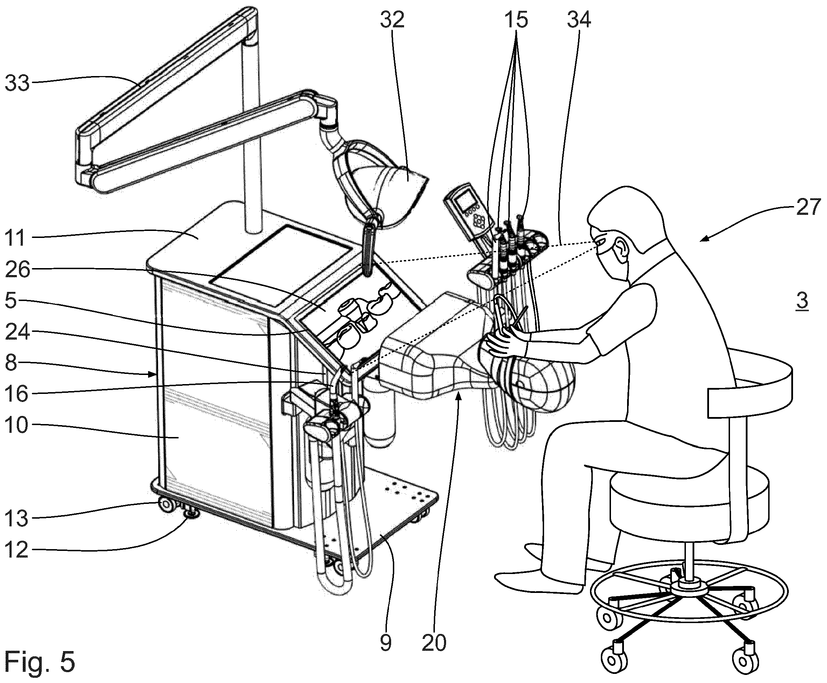

## Patentansprüche

1. Vorrichtung für einen dentalen Ausbildungsplatz umfassend
a. eine Versorgungsstation (8) mit mindestens einem daran angeschlossenen dentalen Behandlungsübungsinstrument (15, 16, 17),
b. eine an der Versorgungsstation (8) gehaltene Übungspuppe (20),
c. einen an der Versorgungsstation (8) befestigten Bildschirm (5) zur Darstellung von Bildern und/oder Filmen,
d. eine mit dem Bildschirm (5) in Signalverbindung stehende Steuerungseinheit (29),
**dadurch gekennzeichnet, dass** der Bildschirm (5) in vertikaler Richtung unterhalb einer von der Übungspuppe (20) festgelegten Arbeitshöhe angeordnet ist.

2. Vorrichtung gemäß Anspruch 1, **dadurch gekennzeichnet, dass** das mindestens eine dentale Behandlungsübungsinstrument eine intraorale Kamera (17), einen 3D-Scanner und/oder einen Zahnarztbohrer (15) aufweist.

3. Vorrichtung gemäß einem der vorstehenden Ansprüche, **dadurch gekennzeichnet, dass** der Bildschirm (5) mit einer mittleren vertikalen Höhe (hₘ) bezüglich einer Aufstellfläche der Versorgungsstation (8) von höchstens 1,5 m, insbesondere von höchstens 1,2 m, insbesondere von höchstens 1,0 m und insbesondere von mindestens 0,5 m angeordnet ist.

4. Vorrichtung gemäß einem der vorstehenden Ansprüche, **dadurch gekennzeichnet, dass** der Bildschirm (5) gegenüber einer Horizontalebene mit einem Neigungswinkel (n) geneigt angeordnet ist.

5. Vorrichtung gemäß einem der vorstehenden Ansprüche, **dadurch gekennzeichnet, dass** der Bildschirm (5) unmittelbar an der Versorgungsstation (8) angeordnet ist.

6. Vorrichtung gemäß einem der vorstehenden Ansprüche, **dadurch gekennzeichnet, dass** der Bildschirm (5) an der Versorgungsstation (8), insbesondere an deren Gehäuse (10), überhängend oder darin integriert angeordnet ist.

7. Vorrichtung gemäß einem der vorstehenden Ansprüche, **dadurch gekennzeichnet, dass** die Übungspuppe (20) höhenverstellbar und/oder neigungsverstellbar an der Versorgungsstation (8) angeordnet ist.

8. Vorrichtung gemäß einem der vorstehenden Ansprüche, **dadurch gekennzeichnet, dass** die Steuerungseinheit (29) ein Daten-Sende-/ Empfangsmodul (30) zum Senden und/oder Empfangen von Daten aufweist.

9. Vorrichtung gemäß einem der vorstehenden Ansprüche, **gekennzeichnet durch** ein, insbesondere bidirektionales, Kommunikationssystem (31).

10. Dentale Schulungseinrichtung umfassend mindestens einen Dozenten-Arbeitsplatz (2) und mindestens einen dentalen Ausbildungsplatz (3) mit einer Vorrichtung (4) gemäß einem der vorstehenden Ansprüche, wobei der mindestens eine Dozenten-Arbeitsplatz (2) und der mindestens eine dentale Ausbildungsplatz (4) signaltechnisch miteinander in Verbindung stehen.

## Claims

1. Device for a dental training space comprising
a. a care station (8) having at least one dental treatment training instrument (15, 16, 17) connected thereto,
b. a training manikin (20) that is held at the care station (8),
c. a screen (5) that is attached to the care station (8) for displaying images and/or films,
d. a control unit (29) that is in signal communication with the screen (5),
**characterised in that** the screen (5) is arranged in a vertical direction below a working height that is defined by the training manikin (20).

2. Device according to Claim 1, **characterised in that** the at least one dental treatment training instrument comprises an intraoral camera (17), a 3D scanner and/or a dental drill (15).

3. Device according to one of the preceding claims, **characterised in that** the screen (5) is arranged with a mean vertical height (hₘ) with respect to an installation surface of the care station (8) of at most 1.5 m, in particular of at most 1.2 m, in particular of at most 1.0 m and in particular of at least 0.5 m.

4. Device according to one of the preceding claims, **characterised in that** the screen (5) is arranged inclined with respect to a horizontal plane at an angle of inclination (n).

5. Device according to one of the preceding claims, **characterised in that** the screen (5) is arranged directly at the care station (8).

6. Device according to one of the preceding claims, **characterised in that** the screen (5) is arranged overhanging or integrated in the care station (8), in particular in its housing (10).

7. Device according to one of the preceding claims, **characterised in that** the training manikin (20) is arranged at the care station (8) in a height-adjustable and/or inclination-adjustable manner.

8. Device according to one of the preceding claims, **characterised in that** the control unit (29) comprises a data transmitting/receiving module (30) for transmitting and/or receiving data.

9. Device according to one of the preceding claims, **characterised by** a, in particular bidirectional, communication system (31).

10. Dental training facility comprising at least one lecturer workspace (2) and at least one dental training space (3) having a device (4) according to one of the preceding claims, wherein the at least one lecturer workspace (2) and the at least one dental training space (4) are connected to one another in terms of signal communication.

## Revendications

1. Dispositif pour un poste de formation dentaire comprenant :
a. une station de soins (8) à laquelle est raccordé au moins un instrument d'entraînement au traitement dentaire (15, 16, 17),
b. un mannequin d'entraînement (20) maintenu sur la station de soins (8),
c. un écran (5) fixé à la station de soins (8) pour afficher des images et/ou des films,
d. une unité de commande (29) en communication par signaux avec l'écran (5),
**caractérisé en ce que** l'écran (5) est disposé dans une direction verticale en dessous d'une hauteur de travail définie par le mannequin d'entraînement (20).

2. Dispositif selon la revendication 1, **caractérisé en ce que** ledit au moins un instrument d'entraînement au traitement dentaire comprend une caméra intra-orale (17), un scanner 3D, et/ou une fraise dentaire (15).

3. Dispositif selon l'une des revendications précédentes, **caractérisé en ce que** l'écran (5) est disposé à une hauteur verticale moyenne (hₘ) par rapport à une surface d'installation de la station de soins (8) d'au plus 1,5 m, en particulier d'au plus 1,2 m, en particulier d'au plus 1,0 m, et en particulier d'au moins 0,5 m.

4. Dispositif selon l'une des revendications précédentes, **caractérisé en ce que** l'écran (5) est disposé avec un angle d'inclinaison (n) par rapport à un plan horizontal.

5. Dispositif selon l'une des revendications précédentes, **caractérisé en ce que** l'écran (5) est disposé directement sur la station de soins (8).

6. Dispositif selon l'une des revendications précédentes, **caractérisé en ce que** l'écran (5) est disposé en porte-à-faux ou intégré à la station de soins (8), en particulier à son boîtier (10).

7. Dispositif selon l'une des revendications précédentes, **caractérisé en ce que** le mannequin d'entraînement (20) est disposé de manière réglable en hauteur et/ou en inclinaison sur la station de soins (8).

8. Dispositif selon l'une des revendications précédentes, **caractérisé en ce que** l'unité de commande (29) présente un module d'émission/réception de données (30) pour émettre et/ou recevoir des données.

9. Dispositif selon l'une des revendications précédentes, **caractérisé par** un système de communication (31), en particulier bidirectionnel.

10. Système de formation dentaire comprenant au moins un poste de travail pour enseignant (2) et au moins un poste de formation dentaire (3) avec un dispositif (4) selon l'une des revendications précédentes, dans lequel ledit au moins un poste de travail pour enseignant (2) et ledit au moins un poste de formation dentaire (4) sont reliés entre eux par transmission de signaux.
